# EUROPÄISCHE PATENTSCHRIFT

(11) **EP 2 329 705 B1**
(45) Veröffentlichungstag und Bekanntmachung des Hinweises auf die Patenterteilung: **06.03.2019**
(21) Anmeldenummer: 10193114.5
(22) Anmeldetag: 30.11.2010
(51) Int. Cl.: A01F 29/22, B24B 49/12, A01D 43/08, A01F 29/09, B24B 3/36

(54) **Häckselmesser für einen Feldhäcksler und Anordnung zur Erfassung von dessen Schärfe**
Cutter blade for a chaff cutter and assembly for determining its sharpness
Hache-paille pour une ramasseuse-hacheuse et agencement de détection de son aiguisement

(30) Priorität: 07.12.2009 DE 102009047584
(43) Veröffentlichungstag der Anmeldung: 08.06.2011
(73) Patentinhaber: Deere & Company, Moline, IL 61265 (US)
(72) Erfinder: Nowack, Thorsten, 55743, Idar-Oberstein (DE); Vogelgesang, Claus-Joseph, 66399, Mandelbachtal (DE)
(74) Vertreter: Holst, Sönke

(56) Entgegenhaltungen:
- EP-A1- 1 935 231
- DD-A1- 245 488
- DE-A1-102007 030 167
- GB-A- 2 234 823
- US-A- 3 635 271

## Beschreibung

Die Erfindung betrifft einen Feldhäcksler nach dem Oberbegriff des Anspruchs 1.

### Stand der Technik

Feldhäcksler dienen zur Ernte von ganzen Pflanzen oder ihren Teilen, die im Betrieb mittels eines Erntevorsatzes von einem Feld aufgenommen, durch Vorpresswalzen zusammengedrückt und einer Messertrommel zugeführt werden, deren Häckselmesser die Pflanzen im Zusammenwirken mit einem Gegenmesser zerschneiden. Anschließend werden die zerschnittenen Pflanzen oder -teile optional einer Nachzerkleinerungseinrichtung zugeführt und durch eine Nachbeschleunigungseinrichtung in einen Auswurfkrümmer gefördert, der sie auf ein Transportfahrzeug überlädt. Die zerkleinerten Pflanzen dienen üblicherweise als Viehfutter oder zur Biogaserzeugung.

Obwohl die Häckselmesser an ihrer Unterseite in der Regel mit einer die eigentliche Schneidkante bildenden Beschichtung aus einem harten Material, wie beispielsweise Wolframkarbid, ausgestattet sind (vgl. US 3 635 271 A), stumpfen sie während des Erntevorgangs nach und nach ab, sodass von Zeit zu Zeit ein Schleifvorgang vorzunehmen ist. Um bei der Wahl des richtigen Zeitpunkts für einen Schleifvorgang und/oder der zugehörigen Schleifdauer nicht von einer Beurteilung der Schärfe der Häckselmesser durch den Bediener abzuhängen, wurde vorgeschlagen, die Schärfe der Häckselmesser auf optischem Wege zu erfassen, beispielsweise mittels einer Kamera oder eines Lasers und eines Lichtsensors, um aus den erfassten Bildern oder Daten eine Information hinsichtlich der Schärfe der Häckselmesser abzuleiten (DE 103 46 412 A1). Eine direkte optische Erfassung der Messerkante zwecks einer Schärfenbestimmung erfordert jedoch eine hohe Auflösung des optischen Systems. Außerdem wird die Genauigkeit durch Verschmutzung beeinträchtigt, denn in der Nähe der Schneidkante lagern sich Erntegutreste ab.

Es wurde weiterhin vorgeschlagen, die von den Schneiden einer Häckseltrommel erfassten Bilder in der Kabine des Feldhäckslers auf einer Anzeigeeinrichtung darzustellen (DE 10 2007 030 167 A1), um dem Bediener einen Überblick über ihren Schärfezustand zu geben. Dort wird zur Kontrastverbesserung eine geeignete Farbgebung der Häckseltrommel beschrieben, die dazu führt, dass nur die Schneiden der Häckselmesser im Bild hell erscheinen. Eine Erkennung des Schärfezustands ist aber aus den oben erwähnten Gründen dennoch problematisch.

Es ist weiterhin vorgeschlagen worden, die Schärfe von Häckselmessern auf magnetische oder induktive Weise mittels eines die Schneidkante abtastenden Sensors zu erfassen (GB 2 234 823 A) oder sie mittels einer Koronaentladung zu detektieren (DD 245 488 A1).

### Aufgabe

Das der Erfindung zu Grunde liegende Problem wird darin gesehen, einen Feldhäcksler mit Häckselmessern und einer Anordnung zur Erfassung von deren Schärfe bereitzustellen, welcher eine verbesserte Erkennung und/oder Bestimmung der Schärfe der Schneidkante ermöglicht.

### Lösung

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Häckselmesser umfasst einen Messerkörper und eine Hartstoffbeschichtung. Der Messerkörper bildet an einem Ende eine Messerschneide. Eine der Messerschneide benachbarte Fläche des Messerkörpers ist (komplett oder nur im der Messerschneide benachbarten Bereich) mit der Hartstoffbeschichtung ausgestattet, die bei einem scharfen Häckselmesser dessen Schneidkante formt. Wenn das Häckselmesser stumpfer wird, nutzt sich an der Schneidkante die Hartstoffbeschichtung ab. Die Hartstoffbeschichtung enthält ein vom Messerkörper unterschiedliches Material oder besteht daraus. Das Material kann selektiv durch einen geeigneten, auf die Messerschneide und die Schneidkante ausgerichteten Sensor für eine oder mehrere physikalische Größen erfasst werden, beispielsweise akustisch, magnetisch, induktiv, elektrisch oder optisch, insbesondere anhand der Radioaktivität, Fluoreszenz oder Phosphoreszenz des Materials.

Auf diese Weise wird anhand des in der Hartstoffbeschichtung enthaltenen Materials eine unproblematische Erfassung der Schärfe des Häckselmessers ermöglicht.

Auch der Messerkörper kann mit sensorisch nachweisbarem Material ausgestattet werden oder daraus bestehen. Es unterscheidet sich in der Art vom sensorisch erfassbaren Material in der Hartstoffbeschichtung. Das Material im Messerkörper kann insbesondere zu Identifikationszwecken dienlich sein, um beispielsweise mittels eines Sensors die Art und/oder Konzentration des Materials im Messerkörper und/oder in der Hartstoffbeschichtung zu erfassen und die Signale einer Auswertungseinrichtung zuzuführen,
die anhand der jeweils im Häckselmesser aufgefundenen Kombination von Materialien eine Information zur Identifikation des Häckselmessers bereitstellt, beispielsweise hinsichtlich seiner Art (z. B. ob es ein gerades oder im Winkel angestelltes Häckselmesser ist), Eigenschaften (z. B. Härtegrad) oder Ist- bzw. Sollposition. Die Auswertungseinrichtung kann somit für den jeweiligen Anwendungszweck ungeeignete oder unrichtig kombinierte Häckselmesser identifizieren und ggf. eine Warnmeldung abgeben oder den Betrieb der Häckseltrommel unterbinden oder die Parameter des Häckselprozesses auf die Messerparameter und/oder Messerschärfe abstimmen.

Es ist auch denkbar, die Signale des das sensorisch nachweisbare Material erfassenden Sensors nur als Anhaltswerte für die Schärfe der Häckselmesser zu verwenden. Sie können insbesondere verwendet werden, eine weitere Einrichtung zur Erfassung der Schärfe der Häckselmesser abzufragen, anzusteuern oder ihren Betrieb auszulösen, die insbesondere auf einer Erfassung der Schnittkräfte (vgl. DE 10 2009 029 675 A1) und/oder einer beliebigen anderen Erfassungsmethodik beruht. Dann kann die Schärfeninformation (und die daraus abgeleitete Information an den Bediener oder eine selbsttätige Steuerung zur Veranlassung eines Schleifvorgangs und/oder dessen Dauer und/oder eine manuelle oder selbsttätige Einstellung der Gegenschneidenposition) nur auf dem Ergebnis der weiteren Einrichtung beruhen, oder deren Ergebnis wird mit dem Signal des Sensors kombiniert.

Obwohl die Erfindung im Kontext eines Feldhäckslers mit einer Häckseltrommel beschrieben wurde, kann sie an beliebigen Häckselmessern Verwendung finden, wie beispielsweise an Häckselmessern für Scheibenradhäcksler oder Strohhäckslermessern für Mähdrescher.

### Ausführunqsbeispiele

In den Zeichnungen ist ein nachfolgend näher beschriebenes Ausführungsbeispiel der Erfindung dargestellt. Es zeigt:
- Fig. 1: einen Feldhäcksler in Seitenansicht und in schematischer Darstellung,
- Fig. 2: eine perspektivische Ansicht der Häckseltrommel des Feldhäckslers,
- Fig. 3: eine seitliche schematische Ansicht eines scharfen Häckselmessers und eines Sensors,
- Fig. 4: das beim Häckselmesser der Fig. 3 erfasste Bild des Sensors,
- Fig. 5: eine seitliche schematische Ansicht eines stumpfen Häckselmessers,
- Fig. 6: das beim Häckselmesser der Fig. 5 erfasste Bild des Sensors,
- Fig. 7: eine seitliche schematische Ansicht eines Häckselmessers mit abgebrochener Hartstoffbeschichtung, und
- Fig. 8: das beim Häckselmesser der Fig. 7 erfasste Bild des Sensors.

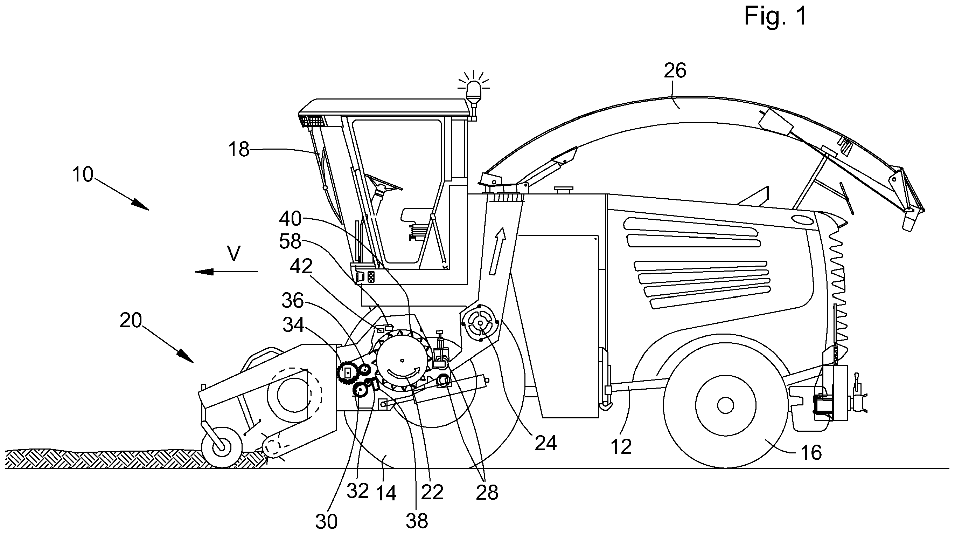

Ein in der Figur 1 gezeigter, selbstfahrender Feldhäcksler 10 baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 in Form einer Pickup einsehbar ist. Mittels der Erntegutaufnahmevorrichtung 20 vom Boden aufgenommenes Gut, z. B. Gras oder dergleichen, wird einer mit Häckselmessern 40 besetzten Häckseltrommel 22 zugeführt, die es im Zusammenwirken mit einer Gegenschneide 38 in kleine Stücke häckselt und es einer Fördervorrichtung 24 aufgibt. Das Gut verlässt die Erntemaschine 10 zu einem nebenher fahrenden Anhänger über einen drehbaren Austragsschacht 26. Zwischen der Häckseltrommel 22 und der Fördervorrichtung 24 befindet sich eine Nachzerkleinerungsvorrichtung 28, durch die das zu fördernde Gut der Fördervorrichtung 24 tangential zugeführt wird. Zwischen der Erntegutaufnahmevorrichtung 20 und der Häckseltrommel 22 wird das Gut durch untere Vorpresswalzen 30, 32 und obere Vorpresswalzen 34, 36 transportiert. Die Häckselmesser 40 können mittels einer Schleifeinrichtung 42 geschärft werden.

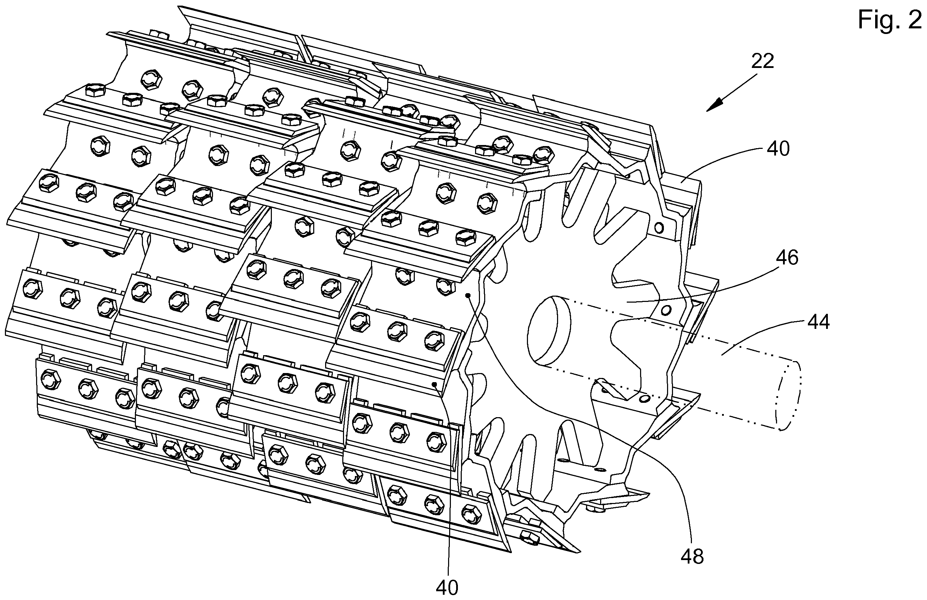

Die Figur 2 zeigt eine perspektivische Ansicht der Häckseltrommel 22. Sie umfasst eine im Rahmen 12 drehbar abgestützte Welle 44, auf der Stützscheiben 46 montiert sind, um deren Umfang die Häckselmesser 40 verteilt sind. Die Häckselmesser 40 sind an Messerhaltern 48 angeschraubt, die wie hier dargestellt, an den Stützscheiben 46 angeschraubt sind. Die Messerhalter 48 könnten aber auch in an sich bekannter Weise auf einem separaten Trommelmantel (nicht gezeigt) aufgeschweißt sein.

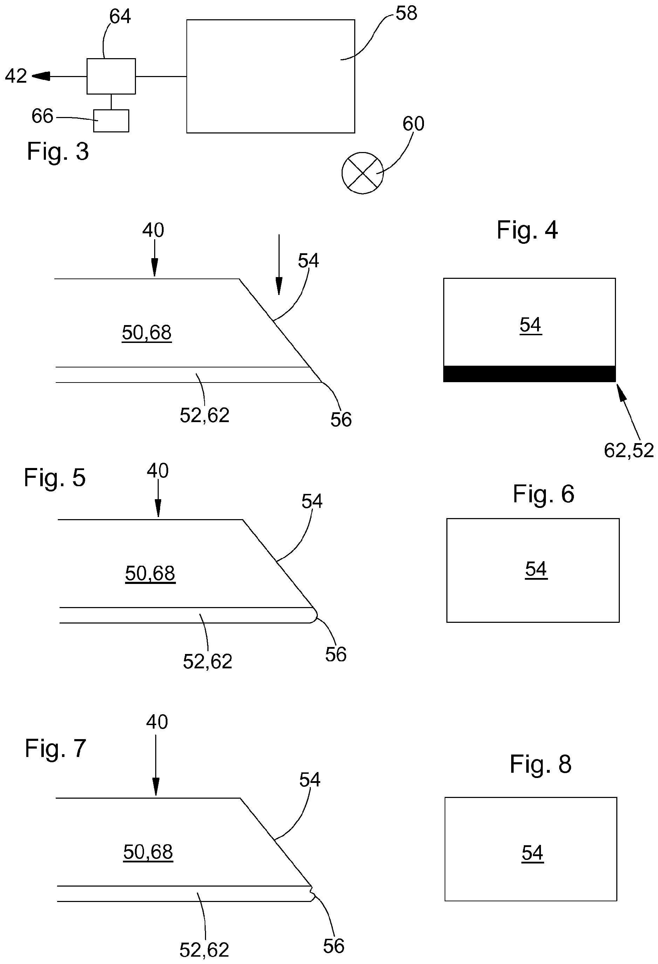

Die Figur 3 zeigt eine schematische seitliche Ansicht des Häckselmessers 40, das sich aus einem in sich flachen Messerkörper 50 und einer an der Unterseite des Messerkörpers 50 angebrachten Hartstoffbeschichtung 52 zusammensetzt. Der Messerkörper 50 läuft in einer schräg zur Fläche des Messerkörpers 50 orientierten Messerschneide 54 aus, die an der Unterseite durch die Hartstoffbeschichtung 52 verlängert wird. Die eigentliche Schneidkante 56 wird bei dem scharfen Häckselmesser 40, wie es in der Figur 3 gezeigt ist, durch die Hartstoffbeschichtung 52 gebildet. Die dargestellte Form des Häckselmessers 40 ist durch die Schleifeinrichtung 42 herstellbar, die in bestimmten Abständen zu aktivieren ist und Material des Messerkörpers 50 und der Hartstoffbeschichtung 52 abträgt.

Um die Erkennung eines geeigneten Zeitpunkts für die Aktivierung der Schleifeinrichtung 42 zu verbessern, ist an der Schleifeinrichtung 42 ein optisch arbeitender Sensor 58 angeordnet, der von oben her, orthogonal zur Ebene des Messerkörpers 50 auf die Messerschneide 54 und die Schneidkante 56 blickt und vorzugsweise mit dem Schleifstein oder selbständig entlang der Breite der Häckseltrommel 22 verfahrbar ist. Der Sensor 58 könnte auch stationär sein und als Sensorarray ausgebildet sein. Der Sensor 58 könnte auch in einer anderen Richtung ausgerichtet sein und zum Beispiel in der Figur 3 schräg von rechts oben auf die Messerschneide 54 und die Schneidkante 56 blicken. Eine in der Nähe des Sensors 58 an der Schleifeinrichtung 42 angebrachte Lichtquelle 60 beleuchtet das Häckselmesser 52. Der Sensor 58 kann als Kamera ausgeführt sein oder er ist als nicht-abbildender Sensor gestaltet und er oder die Lichtquelle 60 tastet die Messerschneide 54 und die Schneidkante 56 ab. Zum mechanischen Aufbau des Sensors, seiner Anbringung und der Auswertung der Signale sei auf die DE 103 46 412 A1 verwiesen. Die Erfassung der Häckselmesser 40 durch den Sensor 58 kann bei schnell oder langsam drehender oder stehender, nach der Aufnahme eines Bildes jeweils um ein Häckselmesser 40 weiter gedrehter Häckseltrommel 22 erfolgen.

In die Hartstoffbeschichtung 52 ist ein kleiner Anteil eines optisch aktiven Materials 62 eingebracht, das beispielsweise fluoresziert, d. h. bei Anregung mit dem Licht der Lichtquelle 60 Licht in einer zweiten, in der Regel längeren Wellenlänge abstrahlt. Der Sensor 58 ist nur in der zweiten Wellenlänge sensitiv. Er erfasst demnach ein Bild, wie es in der Figur 4 dargestellt ist. Dieses Bild setzt sich aus dem Bild der Messerschneide 54 und dem Bild der Hartstoffbeschichtung 52 ein. Da nur letztere das Material 62 enthält, ist auch nur die Hartstoffbeschichtung 52 im Bild hell, während das übrige Bild einschließlich der Messerschneide 54 dunkel ist. Eine am Sensor 58 angeschlossene Verarbeitungseinrichtung 64 kann somit ohne Probleme das Maß erkennen, um welches die Hartstoffbeschichtung 52 in der Ebene des Messerkörpers 50 über die Messerschneide 54 hinausragt.

Falls die Häckselmesser 40 nach längerer Erntezeit stumpf geworden sind, wie in der Figur 5 dargestellt, oder die Hartstoffbeschichtung 52 an der Schneidkante 56 herausgebrochen ist, wie in der Figur 7 dargestellt ist, ragt die Hartstoffbeschichtung 52 nicht mehr nach vorn über die Messerschneide 54 hinaus. Dann sieht der Sensor 58 auch nicht mehr das Material 62 in der Hartstoffbeschichtung 52 und es ergeben sich die Bilder nach Figur 6 und 8, in denen keine Hartstoffbeschichtung zu erkennen ist. Die Verarbeitungseinrichtung 64 erkennt demnach unproblematisch den stumpfen Zustand der Häckselmesser 40 und kann eine daraus abgeleitete Information an den Bediener abgeben oder eine selbsttätige Steuerung zur Veranlassung eines Schleifvorgangs und dessen Dauer an die Schleifeinrichtung 42 abgeben. Die Ausgangssignale des Sensors 58 können auch mit Ausgangssignalen einer weiteren Einrichtung 66 zur Erfassung der Schärfe der Häckselmesser kombiniert werden, die insbesondere auf einer Erfassung der Schnittkräfte beruht (vgl. DE 10 2009 029 675 A1).

Schließlich, aber nicht gemäß der Erfindung, ist auch im Messerkörper 50 oder an dessen Oberfläche ein weiteres Material 68 vorhanden, das sich von dem Material 62 unterscheidet, nämlich bei Anregung mit dem Licht der Lichtquelle 60 Licht in einer dritten, von der zweiten Wellenlänge verschiedenen Wellenlänge abstrahlt. Der Sensor 58 ist auch bei der dritten Wellenlänge sensitiv und die Auswertungseinrichtung 64 leitet aus dessen Intensität eine in der Konzentration des zweiten Materials 68 im Messerkörper kodierte Information ab, die beispielsweise auf die Art des Häckselmessers 40 hindeutet. Stellt die Auswertungseinrichtung 64 fest, dass Häckselmesser 40 unterschiedlicher Arten an der Häckseltrommel 22 montiert sind, gibt sie eine optische oder akustische Fehlermeldung an den Bediener und/oder beeinflusst Parameter des Häckselprozesses.

Es sei noch angemerkt, dass die Lichtquelle 60 und der Sensor 58 durch andere Ausführungsformen ersetzt werden können, wenn das Material 62 in der Hartstoffbeschichtung 52 nicht optisch, sondern auf andere Weise nachweisbar ist. Bei einem induktiven Nachweis könnte die Lichtquelle 60 beispielsweise durch einen Permanent- oder Elektromagneten ersetzt werden, und der Sensor 58 durch eine Induktionsspule oder eine Hallsonde. Der Sensor 58 könnte dann insbesondere an der Gegenschneide 38 befestigt sein.

## Patentansprüche

1. Feldhäcksler (10) mit einer Häckseltrommel (22) mit einem Trommelmantel, auf dem mehrere Häckselmesser (40) montiert sind, die jeweils mit einem Messerkörper (50), ausgestattet sind, der in eine Messerschneide (54) ausläuft, und mit einer Anordnung zur Bestimmung der Schärfe der Häckselmesser (40) mit einem auf die Messerschneide (54) und die Schneidkante (56) ausgerichteten Sensor (58) und einer Verarbeitungseinrichtung (64), die mit dem Sensor (58) verbunden und betreibbar ist, anhand der Signale des Sensor (58) ggf. einen stumpfen Zustand der Häckselmesser (40) zu erkennen und eine daraus abgeleitete Information an einen Bediener oder eine selbsttätige Steuerung zur Veranlassung eines Schleifvorgangs und dessen Dauer an eine Schleifeinrichtung (42) abzugeben oder betreibbar ist, anhand des Signals des Sensors (58) eine weitere Einrichtung (66) zur Erfassung der Schärfe der Häckselmesser (40) abzufragen, **dadurch gekennzeichnet, dass** die Häckselmesser (40) an einer der Messerschneide (54) benachbarten Fläche mit einer Hartstoffbeschichtung (52) ausgestattet sind, welche bei einem scharfen Häckselmesser (40) dessen Schneidkante (56) bildet und ein vom Messerkörper (50) verschiedenes, durch den Sensor (58) erfassbares Material (62) enthält oder daraus besteht, und dass der Sensor (58) für das in der Hartstoffbeschichtung (52) enthaltene Material (62), aber nicht für das Material des Messerkörpers (50) sensitiv ist.

2. Feldhäcksler (10) nach Anspruch 1, **dadurch gekennzeichnet, dass** das Material (62) akustisch, magnetisch, induktiv oder optisch, insbesondere phosphorisierend oder fluoreszierend, sensorisch erfassbar ist.

3. Feldhäcksler (10) nach Anspruch 1 oder 2, **dadurch gekennzeichnet, dass** auch der Messerkörper (50) sensorisch erfassbares Material (68) enthält oder daraus besteht, welches sich in der Art vom sensorisch erfassbaren Material (62) in der Hartstoffbeschichtung (52) unterscheidet.

4. Feldhäcksler (10) nach einem der Ansprüche 1 bis 3, **dadurch gekennzeichnet, dass** die Hartstoffbeschichtung (52) und/oder der Messerkörper (50) mehrere, unterschiedliche sensorisch erfassbare Materialien (62, 68) enthält.

5. Feldhäcksler (10) nach einem der Ansprüche 1 bis 4, **dadurch gekennzeichnet, dass** die sensitive Achse des Sensors (58) orthogonal zur Ebene des Messerkörpers (50) ausgerichtet ist.

6. Feldhäcksler (10) nach einem der Ansprüche 1 bis 5, **dadurch gekennzeichnet, dass** der Sensor (58) zur Erfassung unterschiedlicher Materialien (62) in der Hartstoffbeschichtung (52) eingerichtet und mit einer Auswertungseinrichtung (64) verbunden ist, die aus der jeweils erfassten Kombination eine Information hinsichtlich des jeweiligen Häckselmessers (40) ableitet, beispielsweise seiner Art, Eigenschaften oder Sollposition.

7. Feldhäcksler (10) nach einem der Ansprüche 1 bis 6, **dadurch gekennzeichnet, dass** die weitere Einrichtung (66) zur Erfassung der Schärfe der Häckselmesser (40) auf einer Erfassung der Schnittkräfte beruht.

## Claims

1. Field chopper (10) having a chopper drum (22) with a drum casing on which a plurality of chopper blades (40) are mounted, which chopper blades (40) are each equipped with a blade body (50) which ends in a blade cutting element (54), and having an arrangement for determining the sharpness of the chopper blade (40) with a sensor (58) which is aligned with the blade cutting element (54) and the cutting edge (56), and a processing device (64) which is connected to the sensor (58) and can be operated to detect, if appropriate, a blunt state of the chopper blades (40) on the basis of the signals of the sensor (58) and to output information derived therefrom to an operator or an automatic controller for bringing about a grinding process and the duration thereof to a grinding device (42) or can be operated to interrogate, on the basis of the signal of the sensor (58), a further device (66) for sensing the sharpness of the chopper blade (40), **characterized in that** the chopper blades (40) are equipped, on a face which is adjacent to the blade cutting element (54), with a hard material coating (52) which, in the case of a sharp chopper blade (40), forms the cutting edge (56) thereof and contains a material (62) which is different from the blade body (50) and can be sensed by the sensor (58) or is composed of said material (62), and **in that** the sensor (58) is sensitive to the material (62) which is contained in the hard material coating (52), but not to the material of the blade body (50) .

2. Field chopper (10) according to Claim 1, **characterized in that** the material (62) can be sensed by sensor acoustically, magnetically, inductively or optically, in particular in a phosphorescent or fluorescent fashion.

3. Field chopper (10) according to Claim 1 or 2, **characterized in that** the blade body (50) also contains material (68) which can be sensed by sensor or is composed thereof and differs in the type of material (62) which can be sensed by sensor in terms of the hard material coating (52).

4. Field chopper (10) according to one of Claims 1 to 3, **characterized in that** the hard material coating (52) and/or the blade body (50) contain/contains a plurality of different materials (62, 68) which can be sensed by sensor.

5. Field chopper (10) according to one of Claims 1 to 4, **characterized in that** the sensitive axis of the sensor (58) is aligned orthogonally with the plane of the blade body (50).

6. Field chopper (10) according to one of Claims 1 to 5, **characterized in that** the sensor (58) is configured to sense different materials (62) in the hard material coating (52) and is connected to an evaluation device (64) which derives information relating to the respective chopper blade (40), for example its type, properties or target position, from the respectively sensed combination.

7. Field chopper (10) according to one of Claims 1 to 6, **characterized in that** the further device (66) for sensing the sharpness of the chopper blades (40) is based on sensing of the cutting forces.

## Revendications

1. Ensileuse (10) comportant un tambour de hachage (22) muni d'une enveloppe de tambour sur laquelle sont montés plusieurs couteaux de hachage (40), qui présentent chacun un corps de couteau (50) se prolongeant en une lame de couteau (54), et comportant un système destiné à déterminer l'aiguisement des couteaux de hachage (40) comportant un capteur (58) orienté vers le lame de couteau (54) et l'arête tranchante (56) et un dispositif de traitement (64) relié au capteur (58) et pouvant être commandé, sur la base des signaux du capteur (58), pour détecter le cas échéant un état émoussé du couteau de hachage (40) et pour signaler à un opérateur une information en découlant ou pour transmettre à un dispositif de meulage (42) une commande automatique afin de lancer un processus de meulage, et pour lui indiquer sa durée, ou pouvant être commandé, sur la base du signal du capteur (58), pour interroger un autre dispositif (66) destiné à détecter l'aiguisement des couteaux de hachage (40),
**caractérisée en ce que** les couteaux de hachage (40) sont pourvus, sur une surface adjacente à la lame de couteau (54), d'un revêtement de matériau dur (52) qui, dans le cas d'un couteau de hachage (40) aiguisé, forme son arête tranchante (56) et contient ou consiste en un matériau (62) qui est différent du corps de couteau (50) et peut être détecté par le capteur (58), et **en ce que** le capteur (58) est sensible au matériau (62) contenu dans le revêtement de matériau dur (52) mais pas au matériau du corps de couteau (50).

2. Ensileuse (10) selon la revendication 1, **caractérisée en ce que** le matériau (62) peut être détecté par des capteurs de manière acoustique, magnétique, inductive ou optique, en particulier par phosphorescence ou fluorescence.

3. Ensileuse (10) selon la revendication 1 ou 2, **caractérisée en ce que** le corps de couteau (50) contient ou consiste également en un matériau (68) pouvant être détecté par des capteurs, qui se distingue par le type du matériau (62) pouvant être détecté par des capteurs dans le revêtement de matériau dur (52).

4. Ensileuse (10) selon l'une des revendications 1 à 3, **caractérisée en ce que** le revêtement de matériau dur (52) et/ou le corps de couteau (50) contient une pluralité de matériaux différents (62, 68) pouvant être détectés par des capteurs.

5. Ensileuse (10) selon l'une quelconque des revendications 1 à 4, **caractérisée en ce que** l'axe sensible du capteur (58) est orthogonal au plan du corps de couteau (50).

6. Ensileuse (10) selon l'une des revendications 1 à 5, **caractérisée en ce que** le capteur (58) est conçu pour détecter différents matériaux (62) dans le revêtement de matériau dur (52) et est relié à un dispositif d'évaluation (64) qui obtient, à partir de la combinaison respectivement détectée, une information concernant le couteau de hachage (40) respectif, par exemple son type, ses propriétés ou sa position nominale.

7. Ensileuse (10) selon l'une des revendications 1 à 6, **caractérisée en ce que** l'autre dispositif (66) destiné à détecter l'aiguisement des couteaux de hachage (40) se fonde sur une détection des forces de coupe.
